# EUROPEAN PATENT SPECIFICATION

(11) **EP 0 877 523 B1**
(45) Date of publication and mention of the grant of the patent: **30.06.2004**
(21) Application number: 98303651.8
(22) Date of filing: 08.05.1998
(51) Int. Cl.: H04N 1/00, H04N 1/12

(54) **Pre-scanning method for shuttle scanning system**
Vorabtastverfahren für einen Pendelscanner
Procédé de pré-balayage pour un scanner va et vient

(30) Priority: 08.05.1997 KR 9717570
(43) Date of publication of application: 11.11.1998
(73) Proprietor: Samsung Electronics Co., Ltd., Suwon-city, Kyungki-do (KR)
(72) Inventor: Kang, Sung-wook, Dongjak-gu Seoul (KR)
(74) Representative: Boakes, Jason Carrington

(56) References cited:
- EP-A- 0 488 138
- EP-A- 0 659 008
- GB-A- 2 303 013
- US-A- 4 975 735
- PATENT ABSTRACTS OF JAPAN vol. 018, no. 246 (E-1546), 11 May 1994 (1994-05-11) -& JP 06 030202 A (RICOH CO LTD), 4 February 1994 (1994-02-04)
- PATENT ABSTRACTS OF JAPAN vol. 006, no. 009 (E-090), 20 January 1982 (1982-01-20) -& JP 56 131255 A (JUJO ENG KK), 14 October 1981 (1981-10-14)
- PATENT ABSTRACTS OF JAPAN vol. 017, no. 437 (E-1413), 12 August 1993 (1993-08-12) & JP 05 091240 A (TOKYO ELECTRIC CO LTD), 9 April 1993 (1993-04-09)

## Description

The present invention relates to a shuttle scanning system. More particularly, it relates to a pre-scanning method for a shuttle-scanning system which precludes a so-called "scan gap problem"

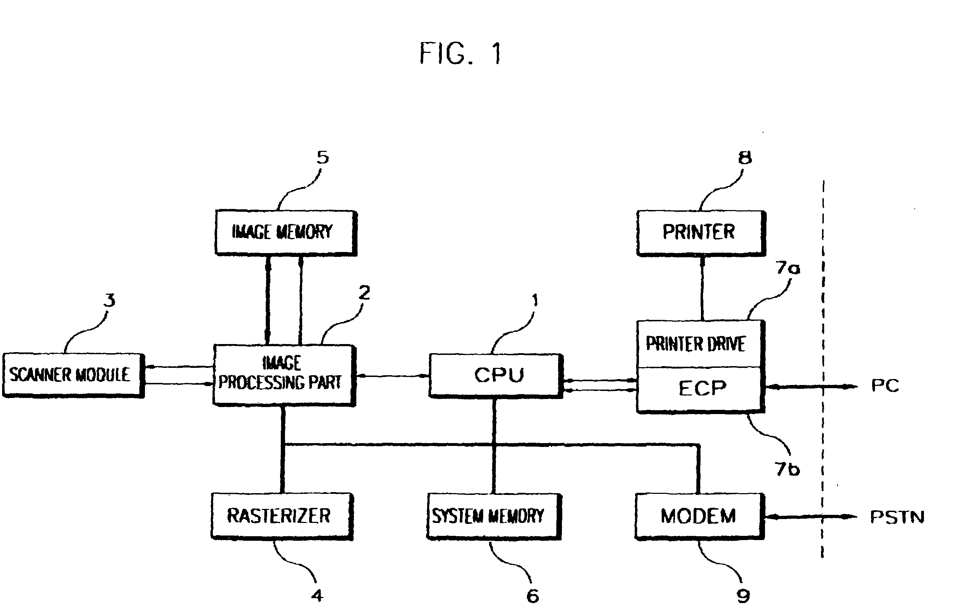

In recent years, several office automation machines have been combined into one system. Considerable progress has been made for example with multi-tasking systems that combine a printer, a facsimile machine, a scanner, etc. FIG. 1 is a schematic block diagram of such a conventional multi-tasking system.

The conventional multi-tasking system includes a central processing unit (CPU) 1 which supervises the operation of the multi-tasking system and a system memory 6 holding a program driving the overall system. An image processing unit 2 controls image data, input from a shuttle scanner module 3 under the control of CPU 1, in shading, gamma correction, dot per inch (DPI) conversion, edge emphasis, error diffusion, etc. A modem 9 modulates or demodulates the process image data under the control of CPU 1. An ECP 7-2 controls PC printing and facsimile printing.

The conventional multi-tasking system also includes a rasterizer 4 which rasterizes image data in blocks, an image memory 5 which is a buffer memory used for processing image data, a system memory 6 that consists of an erasable and programmable read only memory (EPROM) holding the overall system program and a static random access memory (SRAM) used for processing system data, and a printer driver 7-1 which controls a print head, a carriage motor, and a line feed motor, and handles printing data. The ECP 7-2 is a module for direct parallel interface, and either transmits scanned data to the PC or receives data from the PC.

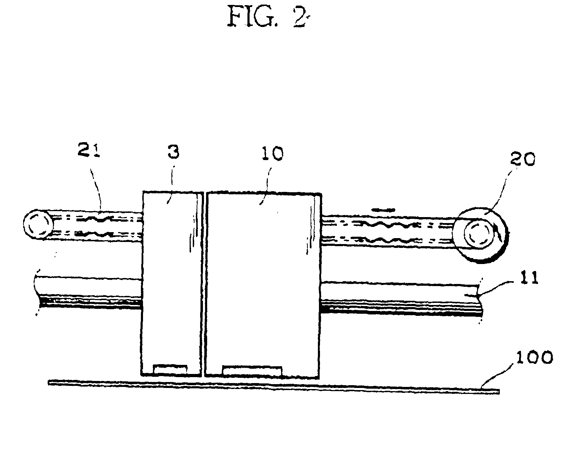

The overall operation of the conventional multi-tasking system will now be described with reference to FIG. 2. Scanner module 3 and a printer module 10 each slide along a horizontal moving shaft 11 via a timing belt 21 and a carriage return motor 20. A document 100 is fed and discharged by line feed roller driven by the operation of a line feed motor.

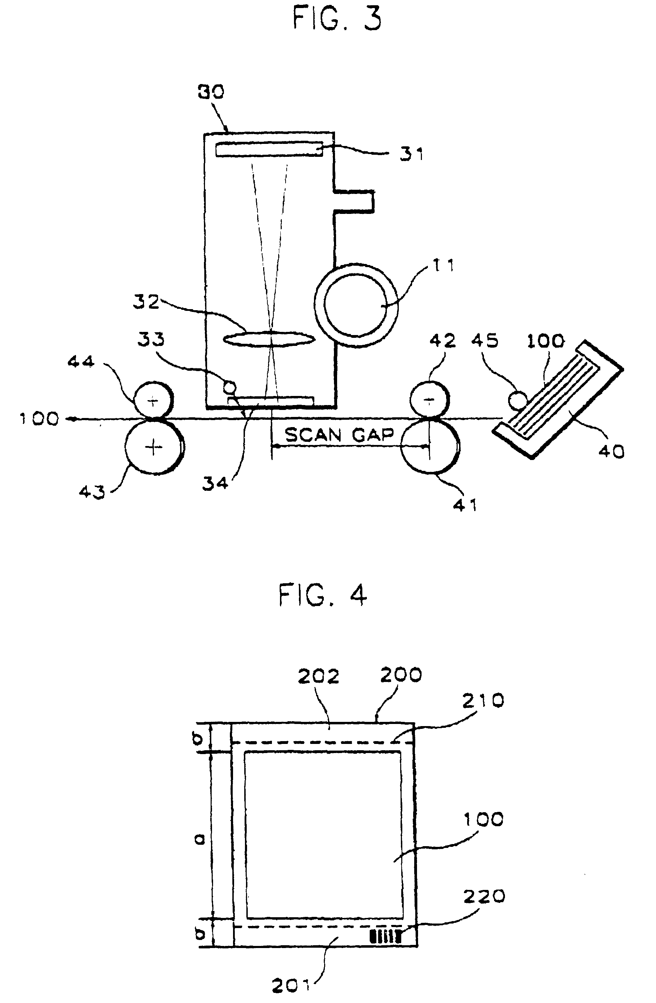

FIG. 3 is a side view of the shuttle scanner module of the multi-tasking system. The shuttle scanner module may use the same driving system as that of an ink-jet head module.

Scanner module 3 and printer module 10, each secured to timing belt 21, are moved to the right and the left along the document surface of carriage return motor 20 to read and print image data. Document 100, held in a paper cassette 40, is interposed between a drive roller 41 and a pinch roller 42 by a feed roller 45. After completion of the scanning process of scanner module 3, document 100 is discharged by the rotating force of feed roller 43 and pinch roller 44.

In the print mechanism, ink particles of the ink-jet head of the printer module 10 are sprayed on document 100 while scanner module 3 and printer module 10 are moved to the right and the left.

In the scan mechanism, a lamp 33 in scanner module 3 applies light to document 100 while scanner module 3 and printer module 10 are moved to the right and the left. The light (the image data of the document), reflected onto the document surface, passes through a lens 32, and a scanner glass 34 and focuses on a charge coupled device (CCD) 31 to readout the image data.

A large memory capacity (A4: about 40MB) is required for converting an image into image data, which takes a long time. Therefore, a pre-scan mechanism has been proposed and widely used in laser scanners. According to this pre-scan mechanism, image data of the overall document is scanned at a relatively low 75 dpi resolution, and a part of the scanned image data is selected on a personal computer screen for scanning at a relatively high resolution. When the document is fed back (in reverse) after pre-scanning, a section known as a "scan gap" is not scanned.

The document is conveyed by a drive roller 41 and a pinch roller 42 and then pre-scanned. The document is held between feed roller 43 and pinch roller 44 to enable it to be fed back in reverse. Thus, there is a limit to the distance by which the document can be fed back. The document is inserted between feed roller 43 and pinch roller 44 to apply a force to the document for normal scanning and document discharge and the usable scanning region of the document is reduced. The conventional technique therefore suffers from the "scan gap" problem during pre-scanning.

JP 06-030202 describes a scanner in which an original document is fed forward for pre-scanning, reverse fed back to a position separated from its original position and fed forward again for scanning. JP 56-131255 describes a scanner in which the document to be scanned is inserted into a document carrier of defined length in relation to the spacing of drive and feed rollers.

An aim of the present invention is to provide a pre-scan mechanism for a shuttle scanning system which avoids the "scan gap" problem.

According to a first aspect of the present invention there is provided a pre-scanning method for a shuttle scanning system comprising a drive roller, a feed roller and a shuttle scanner disposed therebetween, the method comprising:
inserting a document into a carrier sheet;
feeding the carrier sheet in a forward feeding direction by means of said drive roller through the shuttle scanning system to pre-scan the document at a relatively low resolution;
via the drive roller feeding the carrier sheet in a reverse feeding direction through the shuttle scanning system; and
feeding the carrier sheet in the forward feeding direction through the shuttle scanning system to scan at least a desired portion of the document at a relatively high resolution, wherein
the carrier sheet comprises a first portion, of length a for retaining the document and sized to substantially conform with the document, and leading and trailing portions; and
in said pre-scanning step the document carrier is fed by a first distance, such that the trailing edge of the trailing part of the document carrier is not discharged from the drive roller, and sufficient to enable pre-scanning of the document.

According to a second aspect of the present invention there is provided a pre-scanning method for a shuttle scanning system comprising a drive roller, a feed roller and a shuttle scanner disposed therebetween, the method comprising:
feeding a document, or a document carrier sheet comprising a first portion of length a for retaining the document sized to substantially conform with the document and leading and trailing portions, in a forward feeding direction by means of said drive roller into the shuttle scanning system;
scanning the leading end of the document or carrier sheet and determining the existence or otherwise of a recognition code;
if a recognition code is detected:
   feeding the carrier sheet in a forward feeding direction by means of said drive roller by a first distance through the shuttle scanning system to pre-scan the document at a relatively low resolution, said first distance being such that the trailing edge of the trailing part of the document carrier is not discharged from the drive roller and sufficient to enable pre-scanning of the document;
   feeding the carrier sheet in a reverse feeding direction through the shuttle scanning system; and
   feeding the carrier sheet in the forward feeding direction through the shuttle scanning system to scan at least a desired portion of the document at a relatively high resolution; and
if no recognition code is detected:
   feeding the document in a forward feeding direction through the shuttle scanning system to pre-scan the document at a relatively low resolution;
   discharging the document in the forward direction from the shuttle scanning system; and
   feeding the document in the forward feeding direction through the shuttle scanning system to scan at least a desired portion of the document at a relatively high resolution.

Preferably, the carrier sheet is transparent and has a recognition code, for example a bar code, for scanning by the shuttle scanning system. The carrier sheet may have a joint at each end (in the scanning direction of the shuttle scanning system) for preventing the document from being dislocated.

Preferably, a document re-insertion message is displayed to a user after pre-scanning if a carrier sheet is not in use.

Finally, the present invention also extends to a shuttle scanning system adapted to operate according to any of these three methods described.

The present invention will now be described by way of example with reference to the accompanying drawings in which:
FIG. 1 is a block diagram of a conventional multi-tasking system;
FIG.2 depicts the construction of the conventional multi-tasking system of FIG.1.
FIG.3 is a side view of the scanning process of the conventional multi-tasking system;
FIG.4 is a plan view of a carrier sheet in accordance with a first preferred embodiment of the present invention;
FIGS. 5a and 5b depict the states after pre-scanning in accordance with the conventional technique and the present invention, respectively;
FIG.6 schematically depicts the operating process in accordance with a second preferred embodiment of the present invention; and
FIG.7 depicts the control sequence of pre-scanning in accordance with the present invention.

The use of a carrier sheet will now be described in accordance with the present invention. FIG. 4 is a plan view of a carrier sheet 200. Carrier sheet 200 forms a space into which a document 100 can be inserted, and a joint 210 is provided at each of the upper and lower ends 201 and 202 of the carrier sheet 200, to prevent document 100 from being dislocated. A pre-scan recognition code 220 is attached to the upper end 201 of the transparent carrier sheet, i.e. the surface of a leading part of the document.

The pre-scanning by the use of a carrier sheet includes the steps of inserting carrier sheet 200 holding document 100 through a paper feeding part, recognising the pre-scan recognition code 220 on the carrier sheet 200, upper end 201's of the performing the pre-scanning, actuating a drive roller 41 to feed the document 100 back (in reverse), and performing normal scanning on a scanning region.

The present invention employs carrier sheet 200, and there is a difference between the conventional technique and the present invention at the back-feeding point after the pre-scanning. According to the conventional technique, document 100 is inserted between a feed roller 43 and a pinch roller 44 and removed from drive roller 41. In the present invention, the length a + 2b of carrier sheet 200 includes a paper length a and upper and lower ends 201 and 202, and the lower end 202 of carrier sheet 200 is inserted between drive roller 41 and pinch roller 42 at the point of pre-scanning. This allows the drive roller 41 and pinch roller 42 to be actuated and precludes the "scan gap" problem when feeding back the carrier sheet 200.

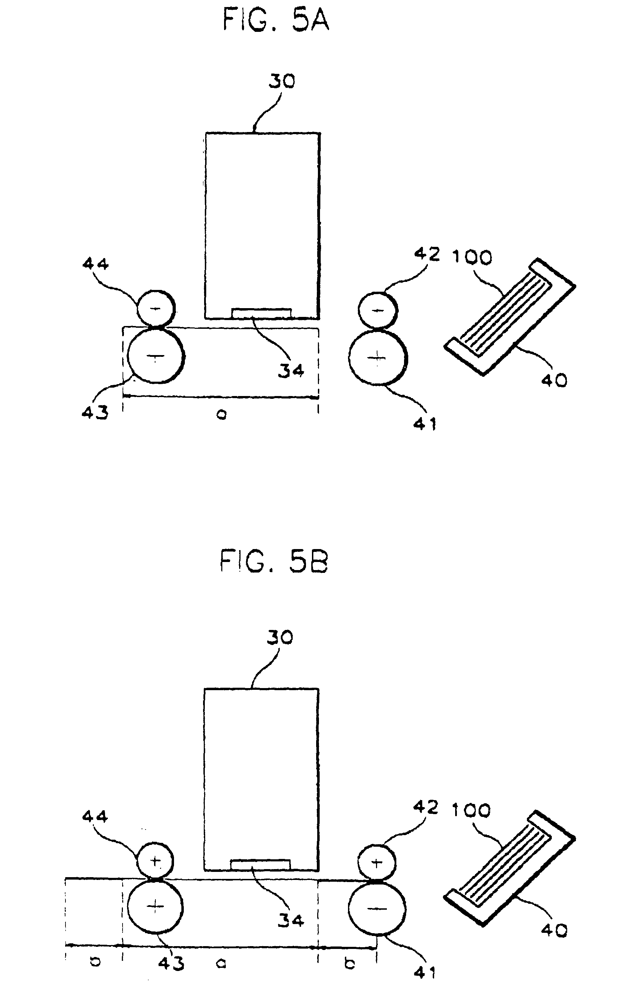

FIGS. 5a and 5b depict the states after pre-scanning in accordance with the conventional technique and the present invention, respectively. As shown in FIG. 5a, according to the conventional technique, document 100 is held by feed roller 43, thus causing a scan gap problem. Referring to FIG. 5b, in the present invention, it is the carrier sheet 200 that is held between drive roller 41 and pinch roller 42 and since the carrier sheet is longer than the document itself, the "scan gap" is divided.

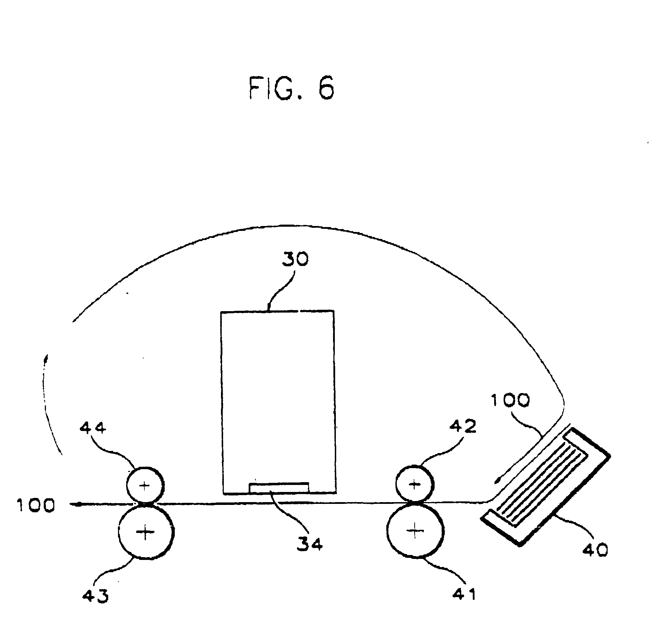

In accordance with a second preferred embodiment of the present invention, as shown in FIG. 6, the scanned document is discharged without back-feeding and then inserted again into the paper feeding part for scanning. That is, the second preferred embodiment of the present invention includes the steps of feeding a document, performing the pre-scanning, discharging the document, re-inserting the document and then performing normal scanning.

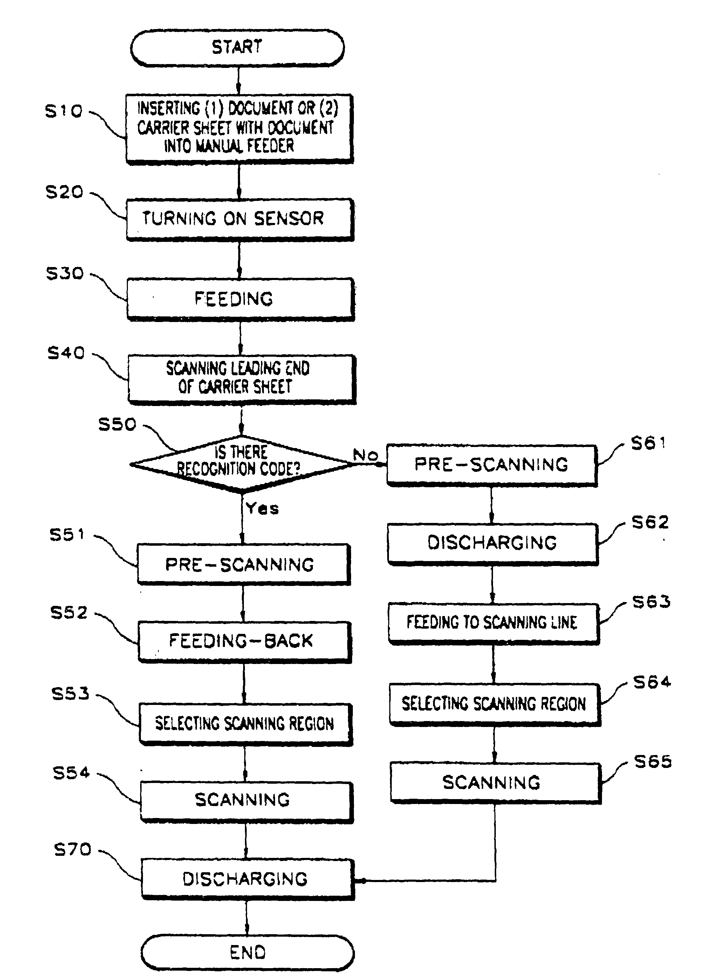

FIG. 7 depicts the control sequence of pre-scanning in accordance with the present invention, and this control sequence is applicable to both the first and second preferred embodiments of the present invention.

The control sequence of pre-scanning includes the steps of inserting (S1) either document 100 or carrier sheet 200 with document 100 into a manual feeder. A feed sensor senses (S2) that the document 100 is inserted into the manual feeder. Next the document is forwarded (S3) 100 until its leading end reaches the scanning starting point and then the leading end of the document 100 is scanned (S4). The presence or absence of a recognition code is confirmed (S5) and the pre-scanning is performed if there is such a recognition code, followed by performing (S5-2) the back-feeding at the point of completion of the pre-scanning, setting (S5-3) a scanning region by the use of a personal computer, performing (S5-4) normal scanning of that region and discharging (S7) document 100 to the outside.

In step S5-2, document 100 is subjected to a moving force from drive roller 41 and pinch roller 42, thus preventing a scanning jam.

The control sequence of pre-scanning also includes (S6-1) the pre-scanning if there is no recognition code, discharging (S6-2) document 100 by the operation of the feed roller 43 and pinch roller 44, re-inserting (S6-3) document 100 into the paper feeding part after pre-scanning, forwarding (S6-4) the leading end of document 100 to a scanning line, setting (S6-5) a scanning region by the use of the personal computer; performing (S6-6) normal scanning of that region and then discharging (S7) the document 100 after scanning.

In step S6-1, after pre-scanning, preferably, a message requesting document re-insertion may be displayed on a liquid crystal display or may be given to a user by using human voice or other sounds.

The above two methods may be properly used according to circumstances. It is advantageous to use the method with the carrier sheet when scanning either an important document that should not be contaminated or paper that is not easily set for scanning. It is good to use the method employing the document only when the carrier sheet is lost or the document is too thick to be inserted into the carrier sheet.

As described above, the present invention may perform the pre-scanning all over the document, and prevents the "scan gap" problem that may occur during pre-scanning.

## Claims

1. A pre-scanning method for a shuttle scanning system comprising a drive roller (41), a feed roller (43) and a shuttle scanner (30) disposed therebetween, the method comprising:
inserting a document (100) into a carrier sheet (200);
feeding the carrier sheet (200) in a forward feeding direction by means of said drive roller (41) through the shuttle scanning system to pre-scan the document (100) at a relatively low resolution;
via the drive roller (41), feeding the carrier sheet (200) in a reverse feeding direction through the shuttle scanning system; and
feeding the carrier sheet (200) in the forward feeding direction through the shuttle scanning system to scan at least a desired portion of the document (100) at a relatively high resolution, wherein
the carrier sheet (200) comprises a first portion, of length a for retaining the document and sized to substantially conform with the document, and leading and trailing portions (201), (202); and
in said pre-scanning step the document carrier (200) is fed by a first distance, such that the trailing edge of the trailing part (202) of the document carrier (200) is not discharged from the drive roller (41), and sufficient to enable pre-scanning of the document.

2. A pre-scanning method according to claim 1 in which the carrier sheet (200) is transparent.

3. A pre-scanning method according to claim 1 or claim 2 in which the carrier sheet (200) has a recognition code, for example a bar code (220), for scanning by the shuttle scanning system.

4. A pre-scanning method according to claim 1,2 or 3 in which the carrier sheet (200) has a joint at each end (in the scanning direction of the shuttle scanning system) for preventing the document (100) from being dislocated.

5. A pre-scanning method for a shuttle scanning system comprising a drive roller (41), a feed roller (43) and a shuttle scanner (30) disposed therebetween, the method comprising:
feeding a document (100), or a document carrier sheet (200) comprising a first portion of length a for retaining the document sized to substantially conform with the document (100) and leading and trailing portions (201), (202), in a forward feeding direction by means of said drive roller (41) into the shuttle scanning system;
scanning the leading end of the document (100) or carrier sheet (200) and determining the existence or otherwise of a recognition code (220);
if a recognition code (220) is detected:
feeding the carrier sheet (200) in a forward feeding direction by means of said drive roller (41) by a first distance through the shuttle scanning system to pre-scan the document (100) at a relatively low resolution, said first distance being such that the trailing edge of the trailing part (202) of the document carrier (200) is not discharged from the drive roller (41) and sufficient to enable pre-scanning of the document (100);
via the drive roller, feeding the carrier sheet (200) in a reverse feeding direction through the shuttle scanning system; and
feeding the carrier sheet in the forward feeding direction through the shuttle scanning system to scan at least a desired portion of the document (100) at a relatively high resolution; and
if no recognition code (220) is detected:
feeding the document (100) in a forward feeding direction through the shuttle scanning system to pre-scan
the document (100) at a relatively low resolution;
discharging the document (100) in the forward direction from the shuttle scanning system; and
feeding the document (100) in the forward feeding direction through the shuttle scanning system to scan at least a desired portion of the document (100) at a relatively high resolution.

6. A pre-scanning method according to claim 5 in which a document re-insertion message is displayed to a user after pre-scanning if no recognition code is detected.

## Patentansprüche

1. Eine Methode des Vorscannens für ein sich hin- und her bewegendes Scansystem, das eine Antriebsrolle (41), eine Vorschubrolle (43) und einen dazwischen angeordneten, sich hin- und her bewegenden Scanner (30) umfasst, wobei die Methode folgende Schritte umfasst:
Einlegen eines Dokuments (100) in ein Trägerblatt (200),
Führung des Trägerblatts (200) mithilfe der besagten Antriebsrolle (41) in Vorwärts-Einzugsrichtung durch das sich hin- und her bewegende Scansystem, um das Dokument (100) in einer relativ niedrigen Auflösung zu scannen;
Führung des Trägerblatts (200) über die Antriebsrolle (41) in Rückwärts-Einzugsrichtung durch das sich hin- und her bewegende Scansystem; und
Führung des Trägerblatts (200) in Vorwärts-Einzugsrichtung durch das sich hin- und her bewegende Scansystem, um wenigstens einen gewünschten Abschnitt des Dokuments (100) in einer relativ hohen Auflösung zu scannen, wobei
das Trägerblatt (200) einen ersten Abschnitt einer Länge a, der das Dokument hält und so groß ist, dass er dem Dokument im Wesentlichen entspricht, und vordere und hintere Abschnitte (201), (202) umfasst, und
der Dokumententräger (200) während des besagten Schritts des Vorscannens aus einer ersten Entfernung zugeführt wird, so dass die hintere Kante des hinteren Abschnitts (202) des Dokumententrägers (200) nicht von der Antriebsrolle (41) freigegeben wird und ausreicht, um das Vorscannen des Dokuments zu ermöglichen.

2. Eine Methode des Vorscannens gemäß Anspruch 1, bei der das Trägerblatt (200) durchsichtig ist.

3. Eine Methode des Vorscannens gemäß Anspruch 1 oder Anspruch 2, bei der das Trägerblatt (200) einen Erkennungscode, zum Beispiel einen Barcode (220) aufweist, der vom sich hin- und her bewegenden Scansystem gescannt wird.

4. Eine Methode des Vorscannens gemäß Anspruch 1, 2 oder 3, bei der das Trägerblatt (200) an jedem Ende eine Fuge aufweist (in der Scanrichtung des sich hin- und her bewegenden Scansystems), um zu verhindern, dass das Dokument (100) verrutscht.

5. Eine Methode des Vorscannens für ein sich hin- und her bewegendes Scansystem, das eine Antriebsrolle (41), eine Vorschubrolle (43) und einen dazwischen angeordneten, sich hin- und her bewegenden Scanner (30) umfasst, wobei die Methode folgende Schritte umfasst:
Führung eines Dokuments (100), oder eines Dokumententrägerblatts (200), das einen ersten Abschnitt einer Länge a, der das Dokument hält und der in seiner Größe im Wesentlichen dem Dokument (100) entspricht, und vordere und hintere Abschnitte (201), (202) umfasst, mithilfe der besagten Antriebsrolle (41) in Vorwärts-Einzugsrichtung in das sich hin- und her bewegende Scansystem;
Scannen des vorderen Endes des Dokuments (100) oder Trägerblatts (200) und Bestimmung, ob es einen Erkennungscode (220) gibt oder nicht;
wenn ein Erkennungscode (220) erfasst wird:
Führung des Trägerblatts (200) in Vorwärts-Einzugsrichtung mithilfe der besagten Antriebsrolle (41) aus einer ersten Entfernung durch das sich hin- und her bewegende Scansystem, um das Dokument (100) in relativ niedriger Auflösung vorzuscannen, wobei die besagte erste Entfernung so groß ist, dass die hintere Kante des hinteren Teils (202) des Dokumententrägers (200) nicht von der Antriebsrolle (41) freigegeben wird und ausreicht, um das Vorscannen des Dokuments (100) zu ermöglichen;
Führung des Trägerblatts (200) über die Antriebsrolle in Rückwärts-Einzugsrichtung durch das sich hin- und her bewegende Scansystem; und
Führung des Trägerblatts in Vorwärts-Einzugsrichtung durch das sich hin- und her bewegende Scansystem, um wenigstens einen gewünschten Abschnitt des Dokuments (100) in einer relativ hohen Auflösung zu scannen; und
wenn kein Erkennungscode (220) erfasst wird:
Führung des Dokuments (100) in Vorwärts-Einzugsrichtung durch das sich hin- und her bewegende Scansystem, um das Dokument (100) in relativ niedriger Auflösung vorzuscannen;
Freigeben des Dokuments (100) in Vorwärts-Einzugsrichtung aus dem sich hin- und her bewegenden Scansystem; und
Führung des Dokuments (100) in Vorwärts-Einzugsrichtung durch das sich hin- und her bewegende Scansystem, um wenigstens einen gewünschten Abschnitt des Dokuments (100) in relativ hoher Auflösung zu scannen.

6. Eine Methode des Vorscannens gemäß Anspruch 5, bei der für einen Benutzer nach dem Vorscannen eine Nachricht zur Wiedereinführung des Dokuments angezeigt wird, wenn kein Erkennungscode erfasst wurde.

## Revendications

1. Procédé de pré-scannage pour un système de scannage navette comprenant un cylindre d'entraînement (41), un cylindre d'alimentation (43) et un scanner navette (30) qui est agencé entre ceux-ci, le procédé se composant des étapes suivantes :
introduire un document (100) dans une feuille support (200) ;
faire passer la feuille support (200) selon un sens d'alimentation vers l'avant à l'aide dudit cylindre d'entraînement (41) à travers le système de scannage navette afin de pré-scanner le document (100) à une résolution relativement faible ;
par l'intermédiaire du cylindre d'entraînement (41), faire passer la feuille support (200) selon un sens d'alimentation inverse à travers le système de scannage navette ; et
faire passer la feuille support (200) selon le sens d'alimentation vers l'avant à travers le système de scannage navette afin de scanner au moins une partie souhaitée du document (100) à une résolution relativement élevée, cas dans lequel
la feuille support (200) comprend une première partie ayant une longueur "a" pour retenir le document et dimensionnée pour correspondre essentiellement au document, ainsi que des parties Avant et Arrière (201), (202), et
pendant ladite étape de pré-scannage, le support de document (200) est avancé sur une première distance, de telle sorte que le bord Arrière de la partie Arrière (202) du support de document (200) ne soit pas déchargé du cylindre d'entraînement (41), et soit suffisante pour permettre le pré-scannage du document.

2. Procédé de pré-scannage, selon la revendication 1, dans lequel la feuille support (200) est transparente.

3. Procédé de pré-scannage, selon la revendication 1 ou la revendication 2, dans lequel la feuille support (200) possède un code de reconnaissance, par exemple un code à barres (220), en vue d'un scannage par le système de scannage navette.

4. Procédé de pré-scannage, selon la revendication 1, 2 ou 3, dans lequel la feuille support (200) possède un raccord au niveau de chaque extrémité (dans le sens de scannage du système de scannage navette) pour éviter que le document (100) ne soit dégagé.

5. Procédé de pré-scannage pour un système de scannage navette comprenant un cylindre d'entraînement (41), un cylindre d'alimentation (43) et un scanner navette (30) qui est agencé entre ceux-ci, le procédé se composant des étapes suivantes :
faire passer un document (100) ou une feuille de support de document (200) comprenant une première partie ayant une longueur "a" pour retenir le document dimensionnée pour correspondre essentiellement au document (100), ainsi que des parties Avant et Arrière (201), (202), selon un sens d'alimentation vers l'avant à l'aide dudit cylindre d'entraînement (41) pour l'amener dans le système de scannage navette ;
scanner le bord Avant du document (100) ou de la feuille support (200) et déterminer l'existence, ou autre, d'un code de reconnaissance (220) ;
si un code de reconnaissance (220) est détecté :
faire passer la feuille support (200) selon un sens d'alimentation vers l'avant à l'aide dudit cylindre d'entraînement (41) sur une première distance à travers le système de scannage navette afin de pré-scanner le document (100) à une résolution relativement faible, ladite première distance étant telle que le bord Arrière de la partie Arrière (202) du support de document (200) ne soit pas déchargé du cylindre d'entraînement (41), et soit suffisante pour permettre le pré-scannage du document (100) ;
par l'intermédiaire du cylindre d'entraînement, faire passer la feuille support (200) selon un sens d'alimentation inverse à travers le système de scannage navette ; et
faire passer la feuille support selon le sens d'alimentation vers l'avant à travers le système de scannage navette afin de scanner au moins une partie souhaitée du document (100) à une résolution relativement élevée ; et
si aucun code de reconnaissance (220) n'est détecté :
faire passer le document (100) selon un sens d'alimentation vers l'avant à travers le système de scannage navette afin de pré-scanner le document (100) à une résolution relativement faible ;
décharger le document (100) du système de scannage navette dans le sens d'alimentation vers l'avant ; et
faire passer le document (100) selon le sens d'alimentation vers l'avant à travers le système de scannage navette afin de scanner au moins une partie souhaitée du document (100) à une résolution relativement élevée.

6. Procédé de pré-scannage, selon la revendication 5, dans lequel un message Réintroduction de document est affiché à l'intention de l'utilisateur, après le pré-scannage dans le cas où aucun code de reconnaissance n'est détecté.
